# EUROPÄISCHE PATENTSCHRIFT

(11) **EP 3 306 142 B1**
(45) Veröffentlichungstag und Bekanntmachung des Hinweises auf die Patenterteilung: **27.01.2021**
(21) Anmeldenummer: 16192407.1
(22) Anmeldetag: 05.10.2016
(51) Int. Cl.: F16H 57/08, F16H 57/04

(54) **LAGERUNG FÜR EIN PLANETENRAD EINES PLANETENGETRIEBES**
BEARING FOR A PLANETARY WHEEL OF A PLANET GEAR
PALIER DE ROUE SATELLITE D'UN ENGRENAGE PLANÉTAIRE

(43) Veröffentlichungstag der Anmeldung: 11.04.2018
(73) Patentinhaber: Flender GmbH, 46395 Bocholt (DE)
(72) Erfinder: Meyer, Thomas, 52223 Stolberg (DE)
(74) Vertreter: Maier, Daniel Oliver

(56) Entgegenhaltungen:
- EP-A1- 2 383 480
- WO-A1-2004/079230
- WO-A1-2015/058749
- WO-A2-2009/141140
- DE-A1-102008 010 307
- DE-B1- 1 400 991
- DE-B3-102015 201 248
- JP-A- 2010 255 778
- US-A- 5 356 352

## Beschreibung

Die Erfindung betrifft ein Planetengetriebe mit einem Planetenrad, das in einer verbesserten Lagerung aufgenommen ist. Die Erfindung betrifft auch eine Windkraftanlage, die mit einem entsprechenden Planetengetriebe ausgerüstet ist.

Aus EP 2 383 480 A1 ist ein Planetengetriebe für eine Windkraftanlage bekannt, das ein Planetenrad umfasst, das drehbar auf einer Achse gelagert ist, die in eine Wange eines Planetenträgers aufgenommen ist. Zwischen dem Planetenrad und der Wange des Planetenträgers ist ein Axialgleitlager aufgenommen. Derartige Axialgleitlager sind kraftschlüssig oder formschlüssig mit den Wangen des Planetenträgers verbunden.

Die Druckschrift EP 2 042 753 A1 offenbart ein hydrodynamisches Axiallager zur Lagerung einer Welle eines Abgasturboladers. Das hydrodynamische Axiallager umfasst eine Schwimmscheibe, die beidseitig mit einer Profilierung versehen ist. Die Profilierung umfasst mehrere in Umfangsrichtung ansteigende Keilflächen mit je einer angrenzenden Rastfläche. Im Bereich der Keilflächen ist auch eine Schmiernut ausgebildet.

Aus dem Dokument WO 2015/058749 A1 ist ein Planetengetriebe bekannt, das einen Planetenradträger umfasst, an dem ein Planetenrad drehbar angeordnet ist. Jeweils zwischen den Stirnseiten des Planetenrads und dem Planetenträger sind Axiallagerscheiben angeordnet, und so jeweils ein Axiallager ausbilden. Die Axiallagerscheiben können jeweils mit dem Planetenrad verbunden sein und auf dem Planetenradträger laufen. Alternativ können die Axiallagerscheiben jeweils mit dem Planetenradträger verbunden sein und auf dem Planetenrad laufen.

Die Patentschrift DE 10 2015 201 248 B3 offenbart eine Gleitlageranordnung auf einem Lagerbolzen, der als Planetenradbolzen ausgebildet ist und auf dem ein Planetenrad drehbar angeordnet ist. Im Bereich von Stirnflächen des Planetenrads sind an einem zugehörigen Planetenradträger Axiallagerscheiben angeordnet. Die Axiallagerscheiben sind drehfest mit dem Lagerbolzen verbunden.

DE 14 00 991 B1 zeigt eine Anordnung von Anlaufscheiben für ein Rad bekannt, das durch ein käfigloses Nadellager gelagert ist. Das Nadellager weist Wälznadeln auf, auf denen ein Planetenrad läuft. Die Anlaufscheiben sind als harte und weiche Anlaufscheiben ausgebildet und schwimmend gelagert.

Ein wesentlicher Nachteil der bekannten Lagerungen für Planetenräder besteht darin, dass eine kraftschlüssige oder formschlüssige Verbindung, beispielsweise eine Schraubverbindung, zwischen einem Axialgleitlager und einer Planetenträgerwange einen erheblichen Montageaufwand erfordert. Ein erheblicher Nachteil von profilierten Schwimmscheiben besteht darin, dass diese bei niedrigen Drehzahlen, beispielsweise unterhalb von 100 U/min, dazu neigen, auf der Seite des Planetenrades oder des Planetenträgers trockenzulaufen, was zu gesteigertem Verschleiß führt. Es besteht Bedarf an einem Planetengetriebe, das die Nachteile aus dem bekannten Stand der Technik überwindet, das ein Minimum an Verschleiß und hohe Zuverlässigkeit bietet und gleichzeitig einfach und schnell zu montieren ist. Der Bedarf an einem derartigen verbesserten Planetengetriebe besteht insbesondere für den Bau von Windenergieanlagen.

Diese Aufgabenstellung wird durch das erfindungsgemäße Planetengetriebe mit den Merkmalen des Anspruchs 1 gelöst. Das Planetengetriebe umfasst eine Sonnenwelle mit einem Sonnenrad, einen Planetenträger mit mindestens einem Planetenrad und ein Hohlrad, in dem die Planetenräder laufen. Der Planetenträger weist eine Ausnehmung auf, in der eine Planetenradachse aufgenommen ist, die zur drehbaren Lagerung eines Planetenrades dient. Die Ausnehmung ist in einer Wange des Planetenträgers ausgebildet. Zur drehbaren Lagerung ist auf der Planetenradachse auch eine Hülse angeordnet, über die ein Schmierstoff zugeführt wird. Zwischen der Wange des Planetenträgers und dem Planetenrad ist eine Axialscheibe angeordnet, die schwimmend gelagert ist. Dadurch liegt zwischen der Axialscheibe und der Wange des Planetenträgers und den Planetenrad im bestimmungsgemäßen Betrieb keine Berührung vor. Die Axialscheibe ist dabei zumindest auf einer Seite, die der Wange des Planetenträgers zugewandt ist, plan ausgebildet. Die plane Form der Axialscheibe umfasst, dass die Stirnseite der Axialscheibe stets eine Ebene bildet, die im Wesentlichen rechtwinklig zu einer Drehachse liegt, um die das Planetenrad rotiert. Infolge der planen Form ist die Axialscheibe frei von in Umfangsrichtung ansteigenden bzw. fallenden Keilflächen oder Rampenflächen.

Die schwimmende Lagerung gewährleistet unterstützt durch den Schmierstoff, dass das Planetenrad reibungsarm drehbar ist. Durch die schwimmende Lagerung der Axialscheibe erfordert diese im erfindungsgemäßen Planetengetriebe keine kraftschlüssige oder formschlüssige Verbindung mit der Wange des Planetenträgers. Auf Bohrungen in der Wange des Planetenträgers zur Aufnahme von Befestigungsmitteln, beispielsweise Schrauben, kann dadurch auch verzichtet werden. Hierdurch werden Schwächungen im Material der Wange des Planetenträgers vermieden, was eine insgesamt effizientere Konstruktion des Planetenträgers erlaubt. Des Weiteren liegt im Bereich des Planetenträgers nur ein reduzierter Arbeitsraum zur Verfügung, was Montagearbeiten an der Lagerung eines Planetenrades erheblich erschwert. Durch die erfindungsgemäße Lösung entfallen diese aufwändigen Montage- und Wartungsarbeiten. Ferner vermeidet die plane Form der Axialscheibe auf der Seite, die der Wange des Planetenträgers zugewandt ist, dass bei einem Kippen oder Schiefstellen der Axialscheibe eine Kante an der Wange des Planetenträgers anliegt. Ein im Wesentlichen linienförmiger Kontakt zwischen der Wange des Planetenträgers und einer Kante auf der Axialscheibe führt zu einem Reibverschleiß an der Wange des Planetenträgers. Infolgedessen kann es bei einem Kippen oder einem Schiefstellen der Axialscheibe zu einem linienförmigen Kontakt mit dem Planetenrad und/oder dem Planetenträger kommen. Ein solcher linienförmiger Kontakt führt zu einem Abschaben eines vorhandenen Schmierstofffilms im Kontakt zum Planetenträger. Ein so einsetzendes Trockenlaufen kann zu einem übermäßig erhöhten Verschleiß führen, was die Lebensdauer und damit auch die Zuverlässigkeit des Planetengetriebes reduziert. Die plane Form der Axialscheibe auf der Seite, die der Wange des Planetenträgers zugewandt ist, führt bei einem Kippen oder Schiefstellen der Axialscheibe an ihrem radial äußeren Rand zu einem im Wesentlichen flächigen Kontakt mit der Wange des Planetenträgers. Der Reibverschleiß an der Wange des Planetenträgers wird so reduziert. Auf dem Planetenrad wird ferner ein Abschaben des Schmierstofffilms verhindert. Zusätzlich ist die plane Form der Axialscheibe einfach und schnell herstellbar. Diese Vorteile werden im erfindungsgemäßen Planetengetriebe auch bei einer niedrigen Drehzahl, beispielsweise unter 100 U/min, erzielt. Die erfindungsgemäße Lösung bietet auch bei niedrigen Drehzahlen insgesamt ein erhöhtes Maß an Lebensdauer, Zuverlässigkeit und Montagefreundlichkeit bei reduziertem Fertigungsaufwand. Auf der Planetenradachse ist ferner eine Gleitlagerschale angeordnet.

Erfindungsgemäß sind die Axialscheibe, das Planetenrad und eine Schmierstoffzufuhr im Bereich der Axialscheibe derart ausgelegt, dass im bestimmungsgemäßen Betrieb zwischen der Axialscheibe und dem Planetenrad ein Schmierstofffilm vorliegt, der eine hydrodynamischen Betrieb zwischen dem Planetenrad und der Axialscheibe gewährleistet. Unter einem hydrodynamischen Betrieb ist hierbei ein Betrieb zu verstehen, in dem zwischen den beteiligten Komponenten, hier also der Axialscheibe und dem Planetenrad, ein Schmierstofffilm vorliegt, in dem sich die Oberflächenunebenheiten der Komponenten nicht berühren. Hierzu ist eine Schmierstoffzufuhr mit ausreichender Förderleistung an Schmierstoff im Bereich des Planetenrads und/oder der Axialscheibe angeordnet. Des Weiteren weisen die Axialscheibe und das Planetenrad einen geeigneten Axialabstand und jeweils eine geeignete Oberfläche auf.

In einer Ausführungsform der Erfindung sind die Axialscheibe, das Planetenrad und die Schmierstoffzufuhr derart ausgelegt sind, dass ein Eintritt von Schmierstoff zwischen die Axialscheibe und des Wange des Planetenträgers auf ein Minimum reduziert oder komplett vermieden wird. Dies erfolgt durch eine Planheit der Wange des Planetenträgers im Bereich der Axialscheibe, wobei eine flächige Auflagefläche entsteht, die im Wesentlichen dicht gegen Schmierstoff ist. Dadurch liegt zwischen der Axialscheibe und der Wange des Planetenträgers ein höherer Reibkoeffizient vor als im Schmierstofffilm zwischen dem Planetenrad und der Axialscheibe. Im bestimmungsgemäßen Betrieb liegt zwischen der Axialscheibe und der Wange des Planetenträgers nur eine Rotation mit minimaler Drehzahl oder keine Rotation vor. Infolge der minimierten Drehzahl der Axialscheibe tritt zwischen der Wange des Planetenträgers und der Axialscheibe auch nur ein minimierter Verschleiß auf. Bei einer Drehzahl der Axialscheibe von Null tritt kein Verschleiß im Zusammenspiel mit der Wange des Planetenträgers ein. Der Verzicht auf einen hydrodynamischen Betrieb zwischen der Axialscheibe und der Wange des Planetenträgers führt damit zu einer konstruktiven Vereinfachung ohne Beeinträchtigung des Verschleißverhaltens.

In einer bevorzugten Ausführungsform der Erfindung kann die Axialscheibe eine erste Dicke von 6 mm bis 20 mm aufweisen. Eine solche Dicke ist geringer als die Dicke von bekannten Schwimmscheiben mit Schmierkeilen. Die erfindungsgemäße Lösung ist damit in Axialrichtung platzsparend, was insgesamt eine kompaktere Konstruktion des Planetengetriebes erlaubt.

Des Weiteren kann im beanspruchten Planetengetriebe mindestens einer der beiden Seiten der Axialscheiben durchgehend plan ausgebildet sein. Dabei bildet die jeweilige Stirnfläche der Axialscheibe eine durchgehende Fläche frei von Erhebungen und/oder Absenkungen. Besonders bevorzugt sind beide Seiten durchgehend plan ausgebildet. Eine derartige Axialscheibe weist ein hohes Maß an Verformbarkeit auf, so dass bei einem Kippen oder Schiefstellen der Axialscheibe zwischen dieser und einer benachbarten Komponente, also der Wange des Planetenträgers und/oder dem Planetenrad, eine vergrößerte Kontaktfläche vorliegt. Ein solcher flächiger Kontakt weist eine besonders minimierte Neigung zum Abschaben eines Schmierstofffilms auf. Des Weiteren ist eine derartige Axialscheibe besonders einfach und wirtschaftlich herstellbar.

Alternativ kann auf mindestens eine der Seiten der Axialscheibe, bevorzugt die Seite, die dem Planetenrad zugewandt ist, mindestens ein erstes Segment mit einer ersten Dicke aufweisen. Das erste Segment bildet dabei im Wesentlichen ein Ringsegment der Axialscheibe. Des Weiteren weist die Seite auch eine zweites Segment mit einer zweiten Dicke auf. Auch das zweite Segment ist im Wesentlichen als Ringsegment der Axialscheibe ausgebildet. Eine Mehrzahl von ersten und zweiten Segmenten, die unmittelbar benachbart zueinander liegen, bilden zwischen der Axialscheibe und dem Planetenrad einen Stufenspalt aus. Der Stufenspalt bietet ein hohes Maß an Tragfähigkeit. Gleichzeitig ist eine Axialscheibe mit ersten und zweiten Segmenten mit jeweils erster und zweiter Dicke einfach und wirtschaftlich herstellbar. Damit ist die Axialscheibe in einfacher Weise auch für in puncto Belastbarkeit anspruchsvolle Anwendungen, wie beispielsweise Windenergieanlagen, ohne Weiteres anpassbar.

Bevorzugt sind im erfindungsgemäßen Planetengetriebe die erste Dicke und ein Axialabstand zwischen dem Planetenrad und der Wange des Planetenträgers derart ausgebildet, dass zwischen diesen eine Spielpassung vorliegt. Hierdurch ist ein ausreichendes Spiel der Axialscheibe gewährleistet, das eine schwimmende Lagerung erlaubt. Das Spiel wird dabei unter Berücksichtigung der Verformung der Wange des Planetenträgers und des Planetenrads im montierten Zustand gewählt. Der im bestimmungsgemäßen Betrieb verbleibende Raum zwischen dem Planetenrad und der Axialscheibe ist derart bemessen, dass ein für einen hydrodynamischen Betrieb ausreichend dicker Schmierstofffilm ausbildbar ist. Gleichzeitig ist der verbleibende Raum zwischen der Axialscheibe und dem Planetenrad ausreichend eng um einen übermäßigen Verlust von Schmierstoff zu verhindern. Durch die einfache Form der Axialscheibe kann somit über nur einen konstruktiven Parameter, nämlich die erste Dicke, in einfacher Weise eine entsprechende Spielpassung hergestellt werden.

Bevorzugt entspricht die Spielpassung im Wesentlichen einer Verformung der Axialscheibe in Axialrichtung, die sich im bestimmungsgemäßen Betrieb infolge der mechanischen Belastung der Axialscheibe ergibt. Besonders bevorzugt entspricht die Spielpassung der Verformung der Axialscheibe in Axialrichtung im bestimmungsgemäßen Betrieb zuzüglich einer Fertigungstoleranz von 0,2 mm bis 0,6 mm.

Im erfindungsgemäßen Planetengetriebe kann die Axialscheibe mindestens eine in Axialrichtung durchgängige Ausnehmung, beispielsweise eine Bohrung, aufweisen. Die durchgängige Ausnehmung erlaubt es, Schmierstoff von der dem Planetenrad zugewandten Seite der Axialscheibe auf deren dem Planetenträger zugewandten Seite zu transportieren. Hierdurch kann zwischen der Wange des Planetenträgers und der Axialscheibe auch eine ausreichende Mangelschmierung erzeugt werden, so dass der Verschleiß zwischen diesen beiden Komponenten weiter reduziert wird.

Weiter bevorzugt kann im erfindungsgemäßen Planetengetriebe auf einer radial äußeren und/oder radial inneren Seite der Axialscheibe eine Abgabevorrichtung zur Abgabe des Schmierstoffs angeordnet sein. Eine Abgabevorrichtung auf der radial inneren Seite der Axialscheibe kann beispielsweise als eine Öffnung in der Planetenradachse, in einer Hülse auf der Planetenradachse oder einem Spalt zwischen dem Planetenrad und der Hülse ausgebildet sein. Eine Abgabevorrichtung für Schmierstoff auf der radial äußeren Seite der Axialscheibe kann beispielsweise eine Öffnung in der Wange des Planetenträgers sein. Die Axialscheibe im erfindungsgemäßen Planetengetriebe kann damit ohne weitere Maßnahmen mit vorhandenen Mitteln mit Schmierstoff versorgt werden. Die erfindungsgemäße Lösung ist folglich ohne Weiteres in bestehende Planetengetriebe im Zuge einer Nachrüstung implementierbar.

Ferner weist das Planetengetriebe in einer bevorzugten Ausführungsform auf beiden Seiten des Planetenrades eine entsprechende Axialscheibe auf. Hierdurch wird auf beiden Seiten des Planetenrades eine Bohrung zur Aufnahme von Befestigungsmitteln und Bauraum eingespart. Die Montage und Reparatur des Planetengetriebes wird so weiter vereinfacht und die technischen Vorteile der Erfindung in besonders hohem Maße erzielt. Insbesondere wird ein übermäßiger Verschleiß durch die Axialscheibe vermieden, so dass die Zuverlässigkeit des Planetengetriebes weiter gesteigert wird.

Die skizzierte Aufgabenstellung wird auch von einer erfindungsgemäßen Windenergieanlage gelöst. Die Windenergieanlage weist eine Gondel auf, die mechanisch mit einem Rotor verbunden ist. Der Rotor ist mechanisch über ein Planetengetriebe mit einem Generator gekoppelt um eine Drehbewegung des Rotors in Elektrizität umzuwandeln. Das Planetengetriebe zwischen dem Rotor und dem Generator ist erfindungsgemäß nach einer der oben skizzierten Ausführungsformen ausgebildet. Die technischen Vorteile des erfindungsgemäßen Planetengetriebes, insbesondere die erhöhte Zuverlässigkeit und Vereinfachung von Montage- und Reparaturarbeiten bei gleichzeitig kosteneffizienter Fertigung kommen bei Windenergieanlagen besonders zum Tragen.

Die Erfindung wird im Folgenden anhand der Ausführungsformen in den Figuren 1 bis 5 näher erläutert. Es zeigen im Einzelnen
- FIG 1: eine Querschnittansicht einer Planetenradlagerung in einem erfindungsgemäßen Planetengetriebe;
- FIG 2: eine Detailansicht der Planetenradlagerung gemäß FIG 1;
- FIG 3: eine Draufsicht und Schnittansicht einer Axial-scheibe gemäß einer ersten Ausführungsform der Erfindung;
- FIG 4: eine Draufsicht und Seitenansicht einer zweiten Ausführungsform der Erfindung;
- FIG 5: schematisch eine geschnittene Schrägansicht einer Windenergieanlage mit einem erfindungsgemäßen Planetengetriebe.

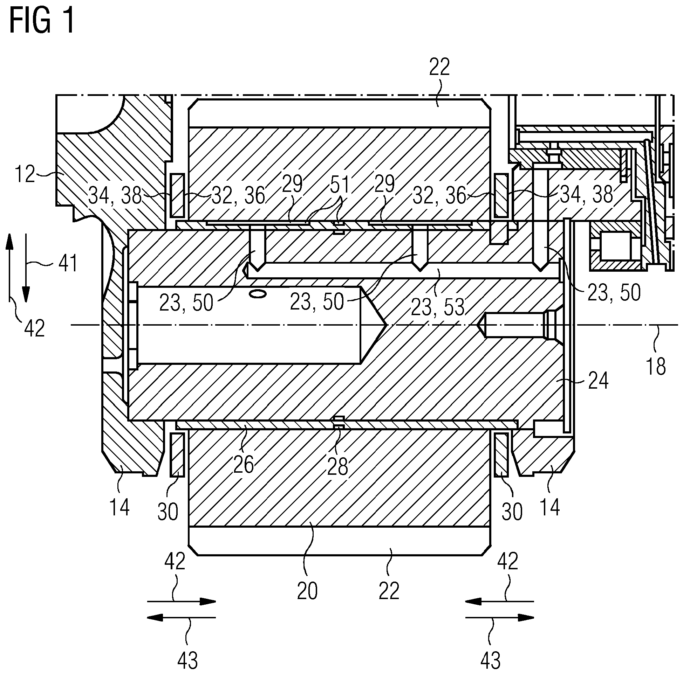

In FIG 1 ist schematisch eine Querschnittansicht einer Planetenradlagerung in einem erfindungsgemäßen Planetengetriebe 10 abgebildet. Das Planetengetriebe 10 umfasst einen Planetenträger 12, zu dem eine Wange 14 gehört, in der eine Planetenradachse 14 aufgenommen ist. Die Planetenradachse 24 weist hydraulisch verbundene Hohlräume 23 auf, die zur Förderung eines Schmierstoffs 50 dienen. Auf der Planetenradachse 24 ist ein Planetenrad 20 drehbar um eine Drehachse 18 gelagert. Dabei gleitet das Planetenrad 20 auf einem Film 51 aus Schmierstoff 50. Film 51 wird durch einen umlaufenden Schmierspalt 28 und Schmiertaschen 29 gebildet, die in der Gleitlagerschale 26 ausgebildet sind. Durch die Gleitlagerschale 26 wird das Planetenrad 20 in Radialrichtung gelagert. Bezüglich des Planetenrades 20 ist eine radial äußere Richtung in FIG 1 durch den Pfeil 40 abgebildet; eine radial innere Richtung durch den Pfeil 41. Mechanische Beanspruchungen, die über eine Verzahnung 22 in das Planetenrad 20 in Radialrichtung eingeleitet werden, werden durch den Film 51 aus Schmierstoff 50, die Gleitlagerschale 26 und die Planetenradachse 24 aufgenommen. Das Planetenrad 20 ist entlang der Axialrichtung hingegen auf der Planetenradachse 24 beweglich. Die axial innere Richtung ist in FIG 1 durch die Pfeile 42 abgebildet; die axial äußere Richtung durch die Pfeile 43. Zwischen dem Planetenrad 20 und der Wange 14 des Planetenträgers 12 ist, in Axialrichtung gesehen, auf jeder Seite des Planetenrades 20 eine Axialscheibe 30 angeordnet.

Die Axialscheiben 30 sind jeweils zwischen der Wange 14 des Planetenträgers 12 und dem Planetenrad 20 angeordnet. Die Axialscheiben 30 sind dabei derart dimensioniert, dass eine schwimmende Lagerung der Axialscheiben 30 vorliegt. Die Axialscheiben 30 werden damit von keinem weiteren Konstruktionselement fixiert und sind in eine axial innere Richtung 42 und eine axial äußere Richtung 43 beweglich. Im bestimmungsgemäßen Betrieb liegt zwischen dem Planetenrad 20 und der axial inneren Seite 32 der Axialscheibe 30 durch eintretenden Schmierstoff 50 eine Schmierung 36 vor, die einen hydrodynamischen Betrieb erlaubt. Zwischen die axial äußere Seite 34 der Axialscheibe 30 und der Wange 14 des Planetenträger 12 tritt höchstens ein Minimum an Schmierstoff 50, so dass hier eine Mangelschmierung 38 vorliegt. Infolge der Mangelschmierung 38 besteht ein erhöhter Reibkoeffizient zwischen der Wange 14 des Planetenträgers 14 und der axial äußeren Seite 34 der Axialscheibe 30. Auf der axial inneren Seite 32 der Axialscheibe 30 liegt im Zusammenspiel mit dem Planetenrad 20 ein reduzierter Reibkoeffizient vor. Hierdurch liegt zwischen der Axialscheibe 30 und der Wange 14 des Planetenträgers 12 bei niedrigen Drehzahlen, beispielsweise unter 100 U/min, eine reduzierte relative Rotation oder keine relative Rotation vor. Zwischen der Axialscheibe 30 und dem Planetenrad 20 liegt hingegen eine relative Rotation vor, die im Wesentlichen einer Drehzahl des Planetenrades 20 entspricht.

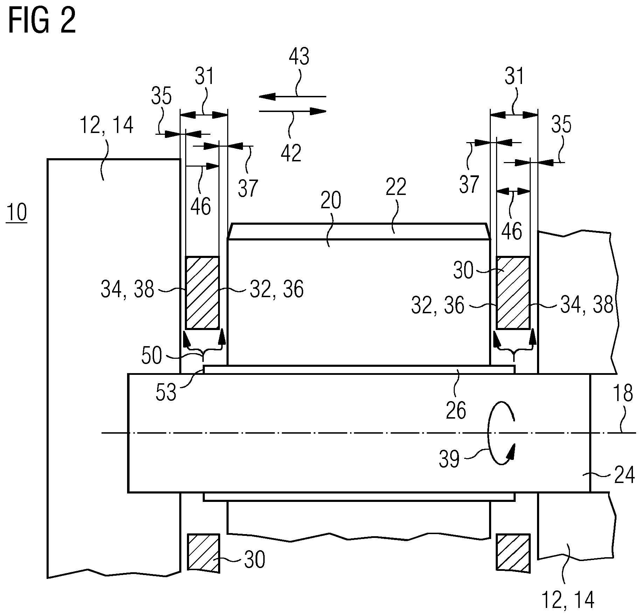

FIG 2 zeigt eine Detailansicht der Querschnittansicht aus FIG 1. Gleiche Bezugszeichen haben in FIG 1 und FIG 2 dieselbe Bedeutung. Die Detailansicht gemäß FIG 2 zeigt die Lage der Axialscheibe 30 im erfindungsgemäßen Planetengetriebe 10. Der Axialabstand 35 zwischen der Axialscheibe 30 und der Wange 14 des Planetenträgers 12 ist reduziert, so dass die radial äußere Seite 24 der Axialscheibe 30 den Durchtritt von Schmierstoff 50 entlang der Wange 14 des Planetenträgers 12 hemmt oder unterbindet. Infolgedessen liegt die Mangelschmierung 38 zwischen der Axialscheibe 30 und der Wange 14 des Planetenträgers 12 vor. Der Schmierstoff 50 tritt in den Bereich der Axialscheibe 30 aus einem axialen Endbereich der Hülse 26 ein. Der reduzierte Durchfluss an Schmierstoff 50 zwischen der Axialscheibe 30 und der Wange 14 des Planetenträgers 12 ist in FIG 2 durch einen verkleinerten verzweigten Pfeil 50 abgebildet. Der Axialabstand 37 zwischen der axial inneren Seite 32 der Axialscheibe 30 und dem Planetenrad 20 ist hingegen größer als der Axialabstand 35 auf der entgegengesetzten Seite 34 der Axialscheibe 30. Dies wird durch einen erhöhten Durchfluss an Schmierstoff 50 gewährleistet, der sich bei Rotation des Planetenrades 20 um die Drehachse 18 einstellt.

Zwischen dem Planetenrad 20 und der Wange 14 des Planetenträgers 12 liegt eine Axialabstand 31 vor, der teilweise durch die Axialscheibe 30 ausgefüllt wird. Die erste Dicke 46 der Axialscheibe 20 ist dabei auf den Axialabstand 31 zwischen dem Planetenrad 20 und der Wange 14 des Planetenträgers 12 derart angepasst, dass zwischen der ersten Dicke 46 und dem Axialabstand 31 eine Spielpassung vorliegt. Die Spielpassung gewährleistet für die Axialscheibe 30 ein ausreichendes Spiel in axial innere und äußere Richtung 42, 43 um auf den jeweiligen Seiten 32, 34 der Axialscheibe 30 eine Mangelschmierung 38 und eine Schmierung 36 zu gewährleisten, die einen hydrodynamischen Betrieb erlaubt. Das Spiel, das sich jeweils für die Axialscheiben 30 in Form der Axialabstände 35, 37 zum Planetenrad 20 und den Wangen 14 des Planetenträgers 12 ergibt, stellt sich jeweils im Betrieb in Abhängigkeit der Verformung der Axialscheibe 30, der auftretenden mechanischen Belastung der Axialscheibe 30 und dem daraus resultierenden Kräfte- und Drehmomentengleichgewicht in der Axialscheibe 30 ein. Die schwimmende Lagerung der Axialscheiben 30 und des Planetenrades 20 führt somit zu einer beidseitig gleichmäßigen Verschleißbeanspruchung der Axialscheiben 30 und des Planetenträgers 12. Insgesamt wird dadurch eine erhöhte Lebensdauer verwirklicht.

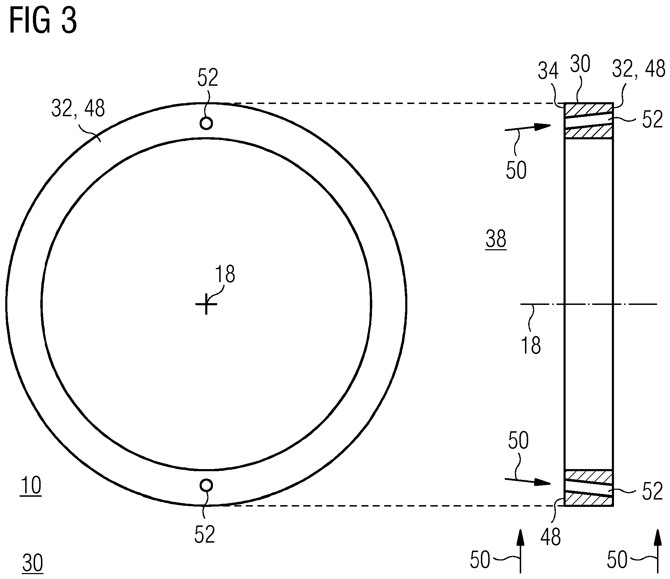

In FIG 3 ist schematisch eine Axialscheibe 30 für eine erste Ausführungsform des erfindungsgemäßen Planetengetriebes 10 abgebildet, wie beispielsweise in FIG 1 oder FIG 2 dargestellt. Für gleiche Merkmale werden in FIG 3 die gleichen Bezugszeichen verwendet wie in FIG 1 und FIG 2. Die Axialscheibe 30 ist im Wesentlichen ringförmig und weist auf jeder Seite 32, 34 eine Stirnfläche 48 auf. Eine Seite 32 der Axialscheibe 30 ist im eingebauten Zustand dem Planetenrad 20 des Planetengetriebes 10 zugewandet und die andere Seite 34 ist der Wange 14 des Planetengetriebes 10 zugewandt. Die Stirnflächen 48 sind beide durchgehend plan ausgebildet. Die Stirnflächen 48 weisen damit keine Kanten auf, die in einer Schiefstellung im Betrieb eines Planetengetriebes 10 mit dem Planetenrad 20 oder der Wange 14 des Planetenträgers 10 in einen linienförmigen Kontakt treten können. Ein dauerhaftes Kippen oder Schiefstellen der Axialscheibe 30, bei dem der Schmierstoff 50 vom Planetenrad 20 abgeschabt wird, kann bei der Axialscheibe 30 nicht eintreten. Die Axialscheibe 30 weist auch zwei durchgehende Ausnehmungen 52, die einen Durchtritt von Schmierstoff 50 von der axial inneren Seite 32 auf die axial äußere Seite 34 der Axialscheibe 30 erlauben. Hierdurch kann eine auf der axial äußeren Seite 34 vorliegende Mangelschmierung 38 wie in FIG 1 oder FIG 2 zusätzlich mit Schmierstoff 50 versorgt werden. Eine zusätzliche Versorgung einer Mangelschmierung 38 mit Schmierstoff 50 erlaubt es, den dort eintretenden Verschleiß auch bei niedrigen Drehzahlen, beispielsweise unter 100 U/min, zu verringern. Die durchgehenden Ausnehmungen 52 sind bezüglich der Drehachse 18 geneigt ausgebildet. Die Axialscheibe 30 gemäß FIG 3 ist einfach und kosteneffizient zu fertigen und bietet ein hohes Maß an Sicherheit gegen ein Schiefstellen im erfindungsgemäßen Planetengetriebe 10.

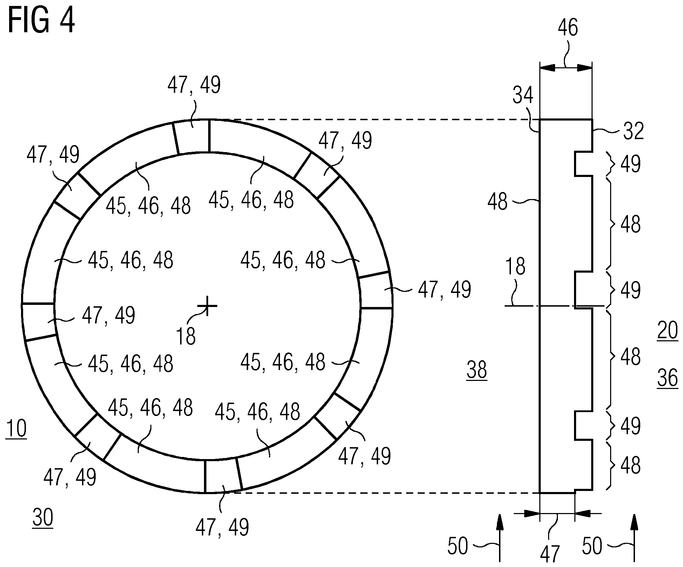

FIG 4 zeigt schematisch eine Axialscheibe 30 gemäß einer zweiten Ausführungsform der Erfindung. Die Axialscheibe 30 ist in einem Planetengetriebe 10 wie in den FIG 1 und FIG 2 dargestellt, einsetzbar. Gleiche Merkmale wie in FIG 1 und FIG 2 tragen in FIG 3 dieselben Bezugszeichen. Die Axialscheibe 30 ist im Wesentlichen ringförmig und weist auf der Seite 32, die einem Planetenrad 20 im erfindungsgemäßen Planetengetriebe 10 zugewandt ist, eine Stirnfläche 48 auf, die in eine Mehrzahl an ersten und zweiten Segmenten 45, 49 aufweist. Die ersten und zweiten Segmente 45, 49 unterteilen die Stirnfläche 48 der Axialscheibe 30 und weisen jeweils eine erste und eine zweite Dicke 46, 47 auf. Die erste Dicke 46 ist dabei größer als die zweite Dicke 47. Dadurch entsteht auf der dem Planetenrad 20 zugewandten Seite 32 der Axialscheibe 30 ein Stufenspalt, der eine erhöhte mechanische Tragfähigkeit bietet. Infolgedessen ist die Axialscheibe 30 gemäß FIG 4 dazu in der Lage, in einer Axialrichtung parallel zur Drehachse 18 erhöhten Kräften standzuhalten. Die Stirnfläche 48 auf der der Wange 14 des Planetenträgers 12 zugewandten Seite 34 der Axialscheibe 30 ist durchgehend plan ausgebildet. Es wird zuverlässig eine Schmierung 36 zwischen dem Planetenrad 20 und der Axialscheibe 30 gewährleistet, die einen hydrodynamischen Betrieb erlaubt und die nur ein Minimum an Verschleiß hervorruft.

Die plane Stirnfläche 48 auf der der Wange 14 zugewandten Seite 34 ist frei von Kanten, die bei eine Schiefstellung der Axialscheibe 30 am Planetenträger 12 einen linienförmigen Kontakt hervorrufen, und damit einen gesteigerten Reibverschleiß verursachen können. Die plane Stirnseite 48 auf der der Wange 14 zugewandten Seite 34 liegt im Wesentlichen flächig am Planetenträger 12 an und minimiert einen Durchfluss von Schmierstoff 50.

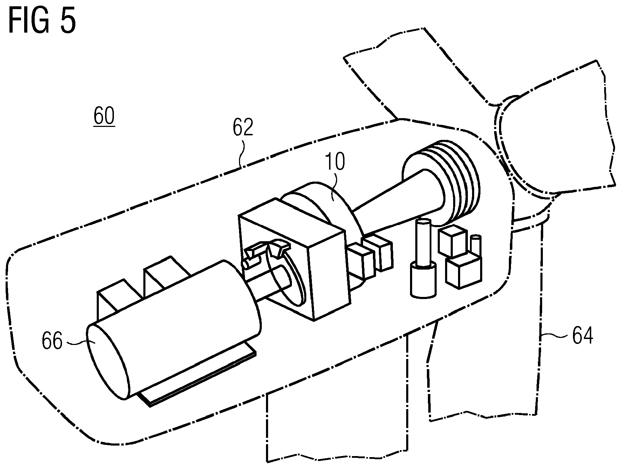

In FIG 5 zeigt schematisch eine geschnittene Schrägansicht einer erfindungsgemäßen Windenergieanlage 60. Zur Windenergieanlage 60 gehört eine Gondel 62, die mit einem Rotor 64 verbunden ist Der Rotor 64 ist über ein Planetengetriebe 10 mit einem Generator 66 gekoppelt, der zur Stromerzeugung dient. Das Planetengetriebe 10 ist gemäß einer der oben skizzierten Ausführungsformen ausgebildet.

## Patentansprüche

1. Planetengetriebe (10), umfassend einen Planetenträger (12) mit einer Ausnehmung zur Aufnahme einer Planetenradachse (24), auf der eine Gleitlagerschale (26) angeordnet ist, auf der ein Planetenrad (20) drehbar gelagert ist, wobei zwischen einer Wange (14) des Planetenträgers (12) und dem Planetenrad (20) mindestens eine Axialscheibe (30) angeordnet ist, **dadurch gekennzeichnet, dass** die Axialscheibe (30) zwischen dem Planetenrad (20) und der Wange (14) des Planetenträgers (12) in einer Axialrichtung (42, 43) schwimmend gelagert ist und die Axialscheibe (30) auf einer der Wange (14) des Planetenträgers (12) zugewandten Seite (34) plan ausgebildet ist, und im bestimmungsgemäßen Betrieb zwischen der Axialscheibe (30) und dem Planetenrad (20) ein Schmierstofffilm vorliegt, der zwischen dem Planetenrad (20) und der Axialscheibe (30) einen hydrodynamischen Betrieb gewährleistet.

2. Planetengetriebe (10) nach Anspruch 1, **dadurch gekennzeichnet, dass** die Axialscheibe (30) zur Ausbildung einer Mangelschmierung (38) zwischen der Wange (14) des Planetenträgers (12) und der Axialscheibe (30) auch auf einer dem Planetenrad (30) zugewandten Seite (32) plan ausgebildet ist.

3. Planetengetriebe (10) nach einem der Ansprüche 1 oder 2, **dadurch gekennzeichnet, dass** die Axialscheibe (30) eine erste Dicke (46) von 6 mm bis 20 mm aufweist.

4. Planetengetriebe (10) nach einem der Ansprüche 1 bis 3, **dadurch gekennzeichnet, dass** mindestens eine der Seiten (32, 34) der Axialscheibe (30) durchgehend plan ausgebildet ist.

5. Planetengetriebe (10) nach einem der Ansprüche 1 bis 3, **dadurch gekennzeichnet, dass** auf mindestens einer Seiten (32, 34) der Axialscheibe (30) ein erstes Segment (45) mit der ersten Dicke (46) und ein zweites Segment (49) mit einer zweiten Dicke (47) ausgebildet ist.

6. Planetengetriebe (10) nach einem der Ansprüche 1 bis 5, **dadurch gekennzeichnet, dass** zwischen der ersten Dicke (46) der Axialscheibe (30) und dem Axialabstand (31) zwischen der Wange (14) des Planetenträgers (12) und dem Planetenrad (20) eine Spielpassung vorliegt.

7. Planetengetriebe (10) nach Anspruch 6, **dadurch gekennzeichnet, dass** die Spielpassung einer Verformung der Axialscheibe (30) in Axialrichtung (42, 43) entspricht.

8. Planetengetriebe (10) nach einem der Ansprüche 1 bis 7, **dadurch gekennzeichnet, dass** die Axialscheibe (30) mindestens eine in Axialrichtung (42, 43) durchgängige Ausnehmung (52) aufweist.

9. Planetengetriebe (10) nach einem der Ansprüche 1 bis 8, **dadurch gekennzeichnet, dass** auf einer radial inneren und/oder radial äußeren Seite (40, 41) der Axialscheibe (30) eine Abgabevorrichtung (53) zur Abgabe eines Schmierstoffs (50) angeordnet ist.

10. Planetengetriebe (10) nach einem der Ansprüche 1 bis 9, **dadurch gekennzeichnet, dass** auf beiden Seiten des Planetenrades (20) eine Axialscheibe (30) angeordnet ist.

11. Windenergieanlage (60), umfassend eine Gondel (62) mit einem Rotor (64), der mechanisch über ein Planetengetriebe (10) mit einem Generator (66) gekoppelt ist, **dadurch gekennzeichnet, dass** das Planetengetriebe (10) nach einem der Ansprüche 1 bis 10 ausgebildet ist.

## Claims

1. Planetary gear set (10), comprising a planet carrier (12) with a recess for receiving a planet gear axis (24), on which a slide bearing shell (26) is arranged, on which a planet gear (20) is mounted rotatably, wherein at least one axial disc (30) is arranged between a web (14) of the planet carrier (12) and the planet gear (20), **characterised in that** the axial disc (30) is mounted in a floating manner between the planet gear (20) and the web (14) of the planet carrier (12) in an axial direction (42, 43) and the axial disc (30) is embodied to be flat on a side (34) facing the web (14) of the planet carrier (12) and during normal operation a lubricant film is present between the axial disk (30) and the planet gear (20), said lubricant film ensuring a hydrodynamic operation between the planet gear (20) and the axial disc (30).

2. Planetary gear set (10) according to claim 1, **characterised in that** the axial disc (30) for embodying a deficient lubrication (38) between the web (14) of the planet carrier (12) and the axial disc (30) is also embodied to be flat on a side (32) facing the planet gear (30).

3. Planetary gear set (10) according to one of claims 1 or 2, **characterised in that** the axial disc (30) has a first thickness (46) of 6 mm to 20 mm.

4. Planetary gear set (10) according to one of claims 1 to 3, **characterised in that** at least one of the sides (32, 34) of the axial disc (30) is embodied to be continuously flat.

5. Planetary gear set (10) according to one of claims 1 to 3, **characterised in that** a first segment (45) with the first thickness (46) and a second segment (49) with a second thickness (47) is embodied on at least one side (32, 34) of the axial disc (30).

6. Planetary gear set (10) according to one of claims 1 to 5, **characterised in that** a clearance fit is present between the first thickness (46) of the axial disc (30) and the axial distance (31) between the web (14) of the planet carrier (12) and the planet gear (20).

7. Planetary gear set (10) according to claim 6, **characterised in that** the clearance fit corresponds to a deformation of the axial disc (30) in the axial direction (42, 43) .

8. Planetary gear set (10) according to one of claims 1 to 7, **characterised in that** the axial disc (30) has at least one recess (52) which is continuous in the axial direction (42, 43) .

9. Planetary gear set (10) according to one of claims 1 to 8, **characterised in that** a dispensing device (53) for dispensing a lubricant (50) is arranged on a radially inner and/or radially outer side (40, 41) of the axial disc (30).

10. Planetary gear set (10) according to one of claims 1 to 9, **characterised in that** an axial disc (30) is arranged on both sides of the planet gear (20).

11. Wind power plant (60), comprising a nacelle (62) with a rotor (64), which is coupled mechanically via a planetary gear set (10) to a generator (66), **characterised in that** the planetary gear set (10) is embodied according to one of claims 1 to 10.

## Revendications

1. Engrenage ( 10 ) planétaire, comprenant un porte-satellite ( 12 ) ayant un évidement de réception d'un axe ( 24 ) de roue satellite, sur lequel est montée une coquille ( 26 ) de coussinet lisse, sur laquelle une roue ( 20 ) satellite est montée tournante, dans lequel, entre un flasque ( 14 ) du porte-satellite ( 12 ) et la roue ( 20 ) satellite, est disposée au moins une cerce ( 30 ) axiale,
**caractérisé en ce que** la cerce ( 30 ) axiale est montée flottante dans une direction ( 42, 43 ) axiale entre la roue ( 20 ) satellite et le flasque ( 14 ) du porte-satellite ( 12 ) et la cerce ( 30 ) axiale est constituée plane sur une face ( 34 ) tournée vers le flasque ( 14 ) du porte-satellite ( 12 ) et, en fonctionnement conforme aux prescriptions, il y a une pellicule de lubrifiant entre la cerce ( 30 ) axiale et la roue ( 20 ) satellite, qui assure un fonctionnement hydrodynamique entre la roue ( 20 ) satellite et la cerce ( 30 ) axiale.

2. Engrenage ( 10 ) planétaire suivant la revendication 1, **caractérisé en ce que** la cerce ( 30 ) axiale est, pour donner un manque ( 38 ) de lubrification entre le flasque ( 14 ) du porte-satellite ( 12 ) et la cerce ( 30 ) axiale, plane également sur une face ( 32 ) tournée vers la roue ( 30 ) satellite.

3. Engrenage ( 10 ) planétaire suivant l'une des revendications 1 ou 2, **caractérisé en ce que** la cerce ( 30 ) axiale a une première épaisseur ( 46 ) de 6 mm à 20 mm.

4. Engrenage ( 10 ) planétaire suivant l'une des revendications 1 à 3, **caractérisé en ce qu'**au moins l'une des faces ( 32, 34 ) de la cerce ( 30 ) axiale est constituée plane d'une manière continue.

5. Engrenage ( 10 ) planétaire suivant l'une des revendications 1 à 3, **caractérisé en ce que**, sur au moins une face ( 32, 34 ) de la cerce ( 30 ) axiale, est constitué un premier segment ( 45 ) ayant la première épaisseur ( 46 ) et un deuxième segment ( 49 ) ayant une deuxième épaisseur ( 47 ).

6. Engrenage ( 10 ) planétaire suivant l'une des revendications 1 à 5, **caractérisé en ce qu'**il y a un ajustement avec jeu entre la première épaisseur ( 46 ) de la cerce ( 30 ) axiale et la distance ( 31 ) axiale entre le flasque ( 14 ) du porte-satellite ( 12 ) et la roue ( 20 ) satellite.

7. Engrenage ( 10 ) planétaire suivant la revendication 6, **caractérisé en ce que** l'ajustement de jeu correspond à une déformation de la cerce ( 30 ) axiale dans la direction ( 42, 43 ) axiale.

8. Engrenage ( 10 ) planétaire suivant l'une des revendications 1 à 7, **caractérisé en ce que** la cerce ( 30 ) axiale a au moins un évidement ( 52 ) continu dans la direction ( 42, 43 ) axiale.

9. Engrenage ( 10 ) planétaire suivant l'une des revendications 1 à 8, **caractérisé en ce qu'**un dispositif ( 53 ) de distribution d'un lubrifiant ( 50 ) est disposé sur une face ( 40, 41 ) intérieure radialement et/ou extérieure radialement de la cerce ( 30 ) axiale.

10. Engrenage ( 10 ) planétaire suivant l'une des revendications 1 à 9, **caractérisé en ce qu'**une cerce ( 30 ) axiale est disposée des deux côtés de la roue ( 20 ) satellite.

11. Eolienne ( 60 ), comprenant une gondole ( 62 ) ayant un rotor ( 64 ), accouplé mécaniquement à une génératrice ( 66 ) par un engrenage ( 10 ) planétaire, **caractérisée en ce que** l'engrenage ( 10 ) planétaire est constitué suivant l'une des revendications 1 à 10.
